(19) Europäisches Patentamt / European Patent Office / Office européen des brevets

(11) **EP 3 749 532 B1**

(12) **EUROPÄISCHE PATENTSCHRIFT**

(45) Veröffentlichungstag und Bekanntmachung des Hinweises auf die Patenterteilung:
**10.05.2023   Patentblatt 2023/19**

(21) Anmeldenummer: **18836254.5**

(22) Anmeldetag: **21.12.2018**

(51) Internationale Patentklassifikation (IPC):
***B60C 5/20*** *(2006.01)*

(52) Gemeinsame Patentklassifikation (CPC):
**B60C 5/20**

(86) Internationale Anmeldenummer:
**PCT/EP2018/086761**

(87) Internationale Veröffentlichungsnummer:
**WO 2019/154553 (15.08.2019 Gazette 2019/33)**

(54) **RAD FÜR EIN KRAFTFAHRZEUG**

WHEEL FOR A MOTOR VEHICLE

ROUE POUR VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.02.2018   DE 102018202003**

(43) Veröffentlichungstag der Anmeldung:
**16.12.2020   Patentblatt 2020/51**

(73) Patentinhaber: **Audi AG**
**85045 Ingolstadt (DE)**

(72) Erfinder:
• **SCHEURICH, Bastian**
**85101 Lenting (DE)**
• **SCHMID, Wolfgang**
**85354 Freising (DE)**
• **SCHMIDT, Oliver**
**85290 Geisenfeld (DE)**
• **UNGER, Andreas**
**85080 Gaimersheim (DE)**
• **HENNING, Kay-Uwe**
**85221 Dachau (DE)**

(56) Entgegenhaltungen:
EP-A1- 1 868 410          EP-A1- 1 925 466
EP-A1- 2 003 924          WO-A1-2015/145148
WO-A1-2016/186717     GB-A- 2 496 427

**Beschreibung**

Die Erfindung betrifft ein Rad für ein Kraftfahrzeug, umfassend eine Felge und einen auf diese aufgezogenen, mit Luft gefüllten Reifen.

Die WO 2015/145148 A1 offenbart Radanordnungen mit erweiterbarem Luftvolumen.

Heutige Kraftfahrzeugreifen müssen einerseits einen möglich geringen Rollwiderstand bieten, gleichzeitig sollen sie eine hohe Tragfähigkeit und eine gute Fahrdynamik aufweisen, wie sie aber auch einen angenehmen Fahrkomfort hinsichtlich der Federeigenschaften oder Dämpfungseigenschaften bieten sollen. Dabei hat insbesondere die Federsteifigkeit einen sehr großen Einfluss auf den Fahrkomfort. Der Fahrzeugreifen selbst steht dabei in einem Spannungsfeld innerhalb der oben genannten Eigenschaften, da die Verbesserung der einen Eigenschaft mitunter zu einer Verschlechterung der anderen führen.

Speziell der Luftdruck im Rad respektive im Reifen unterliegt diesem Zielkonflikt. Der Reifen arbeitet neben seiner konstruktionsbedingten Steifigkeit mit dem eingeschlossenen Luftvolumen nach dem Prinzip der Volumenfederung. Vernachlässigt man die konstruktionsbedingte Steifigkeit des Reifens, so kann vereinfacht angenommen werden, dass sich die Federsteifigkeit des Systems wie folgt berechnet:

$$C= \frac{n * p * A^2}{V}$$

Mit:

    n = Polytropenexponenten
    V = Systemvolumen
    p = Systemdruck
    A = Wirksame Fläche

Die Federsteifigkeit hat, wie ausgeführt, einen großen Einfluss auf den Fahrkomfort. Kann die Federsteifigkeit abgesenkt werden, so wird das System "weicher", die Amplitude der Reifenbeschleunigung verkleinert sich, die Eigenfrequenz kann reduziert werden. Dies führt zu einer signifikanten Verbesserung des Komfortempfindens, sowohl subjektiv als auch objektiv.

Aus obiger Gleichung ergibt sich, dass bei einer Absenkung des Luftdrucks sich die Federsteifigkeit verringert. Mit der Absenkung des Luftdrucks einher geht allerdings auch eine Abnahme der Tragfähigkeit, wie sich auch der Rollwiderstand und die fahrdynamischen Eigenschaften des Reifens respektive des Rads verschlechtern. Die Vergrößerung des Luftvolumen bei gleichem Druck ist üblicherweise nicht möglich. Wird die Radbreite vergrößert, verschlechtert sich der Rollwiderstand, eine Vergrößerung des Radumfangs verhindern etwaige Bauraumbeschränkungen.

Der Erfindung liegt damit das Problem zu Grunde, ein dem gegenüber verbessertes Rad anzugeben.

Zur Lösung dieses Problems ist bei einem Rad der eingangs genannten Art erfindungsgemäß vorgesehen, dass im Inneren des Rads ein in der Luft enthaltene Moleküle adsorbierendes Material vorgesehen ist.

Der Erfindung liegt die Überlegung zu Grunde, in das Radinnere ein in der Luft enthaltene Moleküle adsorbierendes Material einzubringen, wodurch quasi eine "virtuelle" Vergrößerung des Luftvolumens bei gleichem vorhandenem Bauraum respektive Raumvolumen gegeben ist. Das Adsorptionsmaterial, auch Adsorbenz genannt, bindet in großem Umfang freie Moleküle in der Luft. Die Luft setzt primär aus Stickstoff, Sauerstoff und Kohlendioxid zusammen, wobei Stickstoff den größten Anteil darstellt, gefolgt von Sauerstoff und Kohlendioxid. Das adsorbierende Material ist nun in der Lage, aufgrund seiner sehr großen inneren Oberfläche einen Teil dieser Molekülarten oder alle diese Molekülarten, die in der Luft enthalten sind, zu adsorbieren, mithin also "einzulagern". Hierüber ist es möglich, das Luftvolumen im Reifen bei gleichbleibender Außenkontur und gleichbleibendem Innendruck zu vergrößern. De facto kann auf diese Weise mehr Luft in den Reifen eingebracht werden, ohne dass irgendwelche Geometrie- oder Druckänderungen gegeben sind.

Wie sich aus vorstehend angeführter Gleichung ergibt, führt eine Vergrößerung des Volumens, also des Luftvolumens im Radinneren zu einer Erniedrigung der Federsteifigkeit des Reifens respektive des Rads. Hieraus erfolgt eine Verbesserung des Fahrkomforts respektive der Komforteigenschaften des Reifens respektive Rads, resultierend aus dem Umstand, dass zum einen eine Verschiebung der Eigenfrequenz möglich ist, zum anderen aber auch eine Reduktion des Verstärkungsfaktors, der angibt, wie eine von außen über das Rad an oder in das Fahrzeug eingetragene Störung weitergegeben wird, erreicht werden kann. Je geringer die Federsteifigkeit ist, umso geringer ist der Verstärkungsfaktor. Das heißt, dass sich durch die adsorptionsbedingte Erhöhung des Luftvolumens eine Verbesserung des Fahrkomforts erreichen lässt, wenn gleichzeitig die Reifenkontur und der Luftdruck unangetastet bleiben. Dadurch können fahrdynamische Größen unterschiedlich voneinander eingestellt werden.

Gleichzeitig bedeutet ein größeres Luftvolumen aber auch eine höhere Tragfähigkeit des Reifens. Besonders Energiespeicher wie Batterien halten immer mehr Einzug in Fahrzeuge, wobei es sich bei den Batterien um schwere Bauteile handelt. Dadurch steigt das Gesamtgewicht des Fahrzeugs. Ein größeres Luftvolumen im Reifen kann die demzufolge erforderliche höhere Tragfähigkeit des Reifens bieten.

Als ein derartiges adsorbierendes Material respektive Adsorbenz wird bevorzugt Aktivkohle verwendet. Aktivkohle ist poröser Kohlenstoff mit sehr großer innerer Oberfläche. Sie besteht überwiegend aus Kohlenstoff, üblicherweise zu mehr als 90% und weist eine hochporöse Struktur mit offenen Poren auf, wobei je nach

EP 3 749 532 B1

Porengrößenverteilung die innere Oberfläche zwischen 300-2000 m$^2$/g Aktivkohle gegeben ist. Die Porengröße reicht von Submikroporen mit einer Porengröße kleiner 0,4 nm über Mikroporen (0,1-0,2 nm) und Mesoporen (2-50 nm) zu Makroporen (größer 50 nm). Die Aktivkohle ist ein sehr starkes Adsorbenz, da es die in der Luft vorhandenen Moleküle sehr gut adsorbiert und aufgrund der extrem hohen Oberfläche ein großes Luftvolumen einlagern respektive adsorbieren kann.

Neben Aktivkohle kann aber auch Aktivkoks, ebenfalls Kohlenstoff basiert, mit etwas geringerer inneren Oberfläche, Zeolith oder ein Molekularsieb, beispielsweise ein Kohlenstoffmolekularsieb, verwendet werden. Geeignet ist jedes adsorptives Material, das in der Lage ist, die in der Luft vorhandenen Moleküle zu adsorbieren und das eine hinreichend große innere Oberfläche aufweist.

Das Material selbst ist bevorzugt positionsfest angeordnet, so dass es sich während der Bewegung des Rades nicht bewegen kann.

Gemäß einer zweckmäßigen Ausgestaltung ist das Material hierfür an der Felge angeordnet, da die Felge, anders als der Reifen, während der Fahrt keiner Deformation unterliegt. Besonders zweckmäßig ist das Material um das Felgenbett herum angeordnet, eine symmetrische Verteilung ist hier auf einfach Weise möglich, so dass durch die Einbringung des Materials keine Unwucht entsteht.

Das Material selbst kann entweder als loses Schüttmaterial, das in einem entsprechenden Haltemittel fixiert ist, vorliegen. Die Aktivkohle kann beispielsweise in Form von Pellets oder als Granulat vorliegen, das in einem entsprechenden Haltemittel aufgenommen ist. Alternativ kann das Material auch gepresst vorliegen, mithin also in einer definierten, durch einen Pressvorgang vorgegebenen Form.

Wird loses Schüttmaterial verwendet, so wird zweckmäßigerweise entweder ein luftdurchlässiges und flexibles Haltemittel verwendet, oder ein gehäuseartig, stabiles und perforiertes Haltemittel. Als ein luftdurchlässiges und flexibles Haltemittel kann beispielsweise ein Gewebe oder Gewirke, beispielsweise ein Filtervlies oder Ähnliches, verwendet werden, in dem das Schüttmaterial aufgenommen respektive vernäht ist. Denkbar ist es, das Haltemittel beispielsweise schlauch- oder säckchen- oder beutelartig auszuführen und mit dem Schüttmaterial zu befüllen.

Kommt ein stabiles Haltemittel zum Einsatz, so kann dieses beispielsweise aus Kunststoff gefertigt sein und ringförmig ausgeführt werden, bevorzugt mehrteilig, so dass es gehäuseartig und ringförmig zusammensetzbar um das Felgenbett herum angeordnet werden kann. Die Perforation wird vom Durchmesser her natürlich derart ausgeführt, dass die Perforationsöffnungen im Durchmesser kleiner sind als das Schüttmaterial.

Zur Fixierung kann das Haltemittel bevorzugt auf die Felge respektive das Felgenbett aufgeklebt werden, so dass ein sicherer Halt gegeben ist und eine Ablösung auch bei sehr hohen Raddrehzahlen nicht zu besorgen ist.

Wird ein gepresstes Material verwendet, so ist dieses bevorzugt entsprechend der Form des Abschnitts der Felge, an dem es anzuordnen ist, geformt. Wird das Material beispielsweise auf das Felgenbett aufgebracht, so kann das gepresste Material halbkreis- oder halbenschalenförmig ausgeführt sein, so dass zwei derartige Teile zu einem Ring zusammengesetzt werden. Auch dieses gepresste Material wird bevorzugt auf die Felge, insbesondere das Felgenbett aufgeklebt.

Neben dem Rad selbst betrifft die Erfindung ferner ein Kraftfahrzeug, umfassend mehrere Räder der beschriebenen Art. Bei einem Kraftfahrzeug kann es sich beispielsweise um ein Zweirad, also ein Motorrad, oder ein vierrädriges Automobil handeln.

Weitere Vorteile und Einzelheiten der Erfindung ergeben sich aus den im Folgenden beschriebenen Ausführungsbeispielen sowie anhand der Zeichnungen. Dabei zeigen:

Fig. 1   ein erfindungsgemäßes Rad einer ersten Ausführungsform,

Fig. 2   ein erfindungsgemäßes Rad einer zweiten Ausführungsform, und

Fig. 3   ein erfindungsgemäßes Rad einer dritten Ausführungsform.

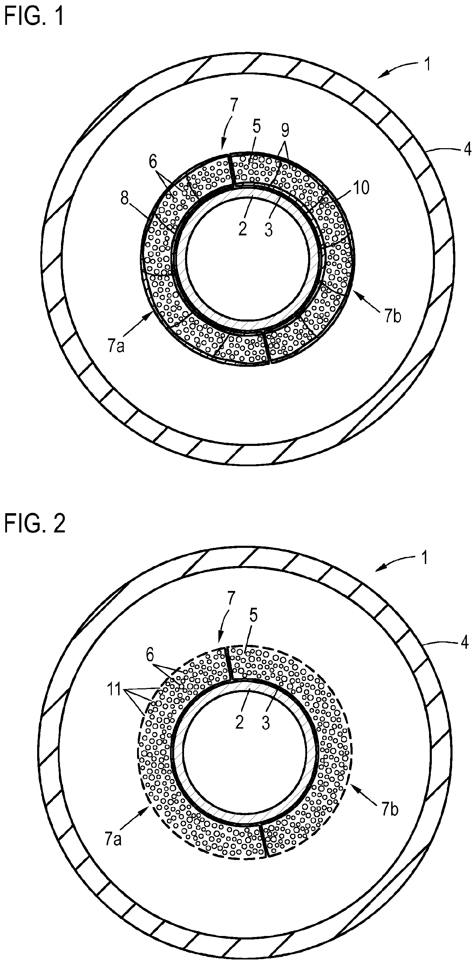

Fig. 1 zeigt ein erfindungsgemäßes Rad 1, geeignet für ein Kraftfahrzeug wie Motorrad oder Automobil, in einer geschnittenen Teilansicht. Es umfasst eine Felge 2 mit einem Felgenbett 3 sowie einen auf die Felge aufgezogenen Reifen 4. Das Innere des Reifens 4 wird mit Luft gefüllt.

Im Inneren des Rads 1 respektive des Reifens 4 ist ein in der Luft enthaltene Moleküle adsorbierendes Material 5 vorgesehen, bei dem es sich beispielsweise um Aktivkohle handelt. Das Material 5 liegt hier als loses Schüttmaterial vor, beispielsweise in Form eines Granulats 6 oder größerer Pellets. Ersichtlich ist das Material 5 um das Felgenbett 2 herum angeordnet und dicht gepackt. Um es in dieser Position zu fixieren, ist ein Haltemittel 7 vorgesehen, hier bestehend aus einem luftdurchlässigen und flexiblen Stoff oder Gewebe 8, beispielsweise einem Filtervlies, das quasi schlauchförmig ist und entsprechend mit dem Material 5 befüllt ist. Das Material 5 kann in den Stoff oder das Gewebe 8 entsprechend eingenäht sein, wozu entsprechende taschenartige Aufnehmungen 9 durch entsprechende Abnäher 10 oder dergleichen ausgebildet sind. Im gezeigten Beispiel sind zwei solcher sich jeweils um 180 Grad erstreckender befüllter Haltemittel 7a, 7b dargestellt, die sich zu einer Ringform, die das gesamte Felgenbett umgibt gibt, ergänzen. Auch mehr als zwei solcher Haltemittel 7 sind denkbar. Die Fixierung erfolgt bevorzugt durch Ankleben am Felgenbett.

3

Durch das eingebrachte Material 5 kann ein deutlich höheres Luftvolumen in den Reifen 4 eingebracht werden, da das Material 5 aufgrund seiner extrem großen Oberfläche die in der Luft enthaltenen Moleküle adsorbiert, also im Inneren eingelagert werden, so dass quasi eine virtuelle Volumenvergrößerung erreicht werden kann. Hierüber kann aufgrund einer daraus resultierenden Erniedrigung der Federsteifigkeit der Fahrkomfort verbessert werden, ohne dass damit eine Verschlechterung des Rollwiderstands, der Tragfähigkeit und der Fahrdynamik einhergeht.

Fig. 2 zeigt ein zweites Ausführungsbeispiel eines erfindungsgemäßen Rads 1, wobei vgl. Bauteile gleiche Bezugszeichen verwendet werden. Auch hier ist am Felgenbett 3 ein Material 5 vorgesehen, beispielsweise wiederum Aktivkohle in Form eines Granulats 6. Dieses ist wiederum in einem entsprechenden Haltemittel 7 aufgenommen, wobei das Haltemittel 7 hier ein stabiles, gehäuseartiges Haltemittel mit einer Vielzahl von Perforationsdurchbrechungen 11 vorgesehen ist, durch die die Luftmoleküle in das Innere eintreten können. Gezeigt sind wiederum zwei Halmittel 7a, 7b, die jeweils um 180 Grad umlaufen und zu einer Ringform verbunden sind. Diese Haltemittel 7a, 7b, also die halbschaligen Gehäuse, sind beispielsweise aus Kunststoff gefertigt. Auch sie sind bevorzugt über eine Klebeverbindung am Felgenbett befestigt.

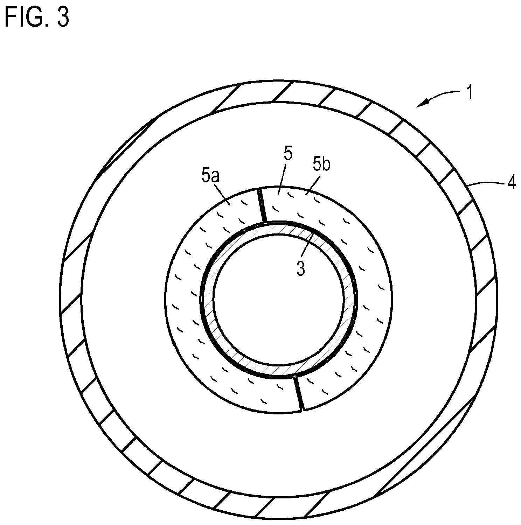

Fig. 3 zeigt schließlich ein erfindungsgemäßes Rad 1, bei dem auf das Felgenbett 3 das Material 5 in gepresster, also stabiler Form aufgebracht, bevorzugt wiederum aufgeklebt ist. Auch hier sind zwei Hälften vorgesehen, nämlich die Abschnitte 5a und 5b, die sich wiederum zu einer Ringform ergänzen. Die jeweiligen gepressten Körper sind also der Form des Bauteils, an dem sie angeordnet werden, angepasst. Hier also der Form des Felgenbetts 3. Besondere Haltemittel sind hier aufgrund der Verpressung des Materials 5, beispielsweise wiederum Aktivkohle, nicht erforderlich.

**Patentansprüche**

1. Rad für ein Kraftfahrzeug, umfassend eine Felge (2) und einen auf diese aufgezogenen, mit Luft gefüllten Reifen (4), wobei im Inneren des Rads (1) ein in der Luft enthaltene Moleküle adsorbierendes Material (5) vorgesehen ist, wobei das Material (5) als loses Schüttmaterial, das in einem Haltemittel (7, 7a, 7b) fixiert ist, oder als gepresstes Material (5) vorliegt, **dadurch gekennzeichnet, dass** zwei sich jeweils um 180° erstreckende Haltemittel (7a, 7b) oder zwei sich jeweils um 180° erstreckende Abschnitte (5a, 5b) aus gepresstem Material vorgesehen sind, die um das Felgenbett (3) herum angeordnet sind und sich zu einer Ringform ergänzen.

2. Rad nach Anspruch 1, **dadurch gekennzeichnet, dass** das Material (5) Aktivkohle, Aktivkoks, Zeolith oder ein Molekularsieb ist.

3. Rad nach Anspruch 2, **dadurch gekennzeichnet, dass** das Material (5) positionsfest angeordnet ist.

4. Rad nach einem der vorangehenden Ansprüche, **dadurch gekennzeichnet, dass** das Haltemittel (7) luftdurchlässig und flexibel ist.

5. Rad nach einem der vorangehenden Ansprüche, **dadurch gekennzeichnet, dass** das Haltemittel (7) gehäuseartig stabil und perforiert ausgeführt ist.

6. Rad nach einem der vorangehenden Ansprüche, **dadurch gekennzeichnet, dass** das gepresste Material (5) entsprechend der Form des Abschnitts der Felge (2), an dem es anzuordnen ist, geformt ist.

7. Rad nach einem der vorangehenden Ansprüche, **dadurch gekennzeichnet, dass** das Haltemittel (7) oder das gepresste Material (5) auf die Felge (2), insbesondere das Felgenbett (3) geklebt ist.

8. Kraftfahrzeug, umfassend mehrere Räder (1) nach einem der vorangehenden Ansprüche.

**Claims**

1. Wheel for a motor vehicle, comprising a rim (2) and a tire (4) mounted thereon and filled with air, wherein a material (5) that adsorbs molecules contained in the air is provided in the interior of the wheel (1), wherein the material (5) is present as loose bulk material held in a holding means (7, 7a, 7b) or as pressed material (5), **characterised in that** two holding means (7a, 7b) each extending through 180° or two segments (5a, 5b) of pressed material each extending through 180° are provided, which are arranged around the rim base (3) and complement each other to form an annular shape.

2. Wheel according to claim 1, **characterised in that** the material (5) is activated carbon, activated coke, zeolite or a molecular sieve.

3. Wheel according to claim 2, **characterised in that** the material (5) is arranged in a fixed position.

4. Wheel according to any one of the preceding claims, **characterised in that** the holding means (7) is air-permeable and flexible.

5. Wheel according to any one of the preceding claims, **characterised in that** the holding means (7) has a housing-like, stable and perforated form.

6. Wheel according to any one of the preceding claims, **characterised in that** the pressed material (5) is shaped to correspond to the shape of the segment of the rim (2) on which it is to be placed.

7. Wheel according to any one of the preceding claims, **characterised in that** the holding means (7) or the pressed material (5) is glued to the rim (2), in particular the rim base (3).

8. Motor vehicle comprising a plurality of wheels (1) according to any one of the preceding claims.

**Revendications**

1. Roue pour un véhicule automobile comprenant une jante (2) et un pneu (4) rempli d'air, enfilé sur celle-ci, dans lequel un matériau (5) absorbant des molécules contenues dans l'air est prévu à l'intérieur de la roue (1), dans laquelle le matériau (5) se présente comme matériau en vrac qui est fixé dans un moyen de retenue (7, 7a, 7b) ou comme matériau pressé (5), **caractérisée en ce que** deux moyens de retenue (7a, 7b) s'étendant respectivement sur 180° ou deux sections (5a, 5b) s'étendant respectivement sur 180° en matériau pressé sont prévues, lesquels sont agencés autour du fond de jante (3) et se complètent en une forme annulaire.

2. Roue selon la revendication 1, **caractérisée en ce que** le matériau (5) est du charbon actif, coke actif, zéolithe ou un tamis moléculaire.

3. Roue selon la revendication 2, **caractérisée en ce que** le matériau (5) est agencé en position bloquée.

4. Roue selon l'une quelconque des revendications précédentes, **caractérisée en ce que** le moyen de retenue (7) est perméable à la l'air et flexible.

5. Roue selon l'une quelconque des revendications précédentes, **caractérisée en ce que** le moyen de retenue (7) est réalisé de manière stable et perforée comme un boîtier.

6. Roue selon l'une quelconque des revendications précédentes, **caractérisée en ce que** le matériau pressé (5) est formé selon la forme de la section de la jante (2), au niveau de laquelle il est à agencer.

7. Roue selon l'une quelconque des revendications précédentes, **caractérisée en ce que** le moyen de retenue (7) ou le matériau pressé (5) est collé sur la jante (2), en particulier le fond de jante (3).

8. Véhicule automobile, comprenant plusieurs roues (1) selon l'une quelconque des revendications précédentes.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015145148 A1